Europäisches Patentamt

European Patent Office

Office européen des brevets

(11) Publication number: **0 238 102 B1**

# EUROPEAN PATENT SPECIFICATION

(45) Date of publication of patent specification: **01.04.92**  (51) Int. Cl.⁵: **B60C 3/04**

(21) Application number: **87105949.9**

(22) Date of filing: **15.08.83**

(60) Publication number of the earlier application in accordance with Art.76 EPC: **0 103 984**

(54) **Pneumatic radial tire.**

(30) Priority: **13.09.82 JP 158013/82**

(43) Date of publication of application:
**23.09.87 Bulletin  87/39**

(45) Publication of the grant of the patent:
**01.04.92 Bulletin  92/14**

(84) Designated Contracting States:
**BE DE FR GB**

(56) References cited:
**EP-A- 0 012 694     DE-A- 2 913 949**
**FR-A- 2 120 421     FR-A- 2 279 574**
**FR-A- 2 499 473     GB-A- 2 002 298**

**KUNSTSTOFFTECHNIK, vol. 11, no. 1/2, January/February 1972, pages 23-30, Mainz, DE; F. FRANK et al.: "Die Ouerschnittsform von Kreuzlagen und Gürtelreifen"**

(73) Proprietor: **BRIDGESTONE TIRE COMPANY LIMITED**
**10-1, Kyobashi 1-Chome Chuo-Ku Tokyo(JP)**

(72) Inventor: **Togashi, Minoru**
**32-11, Miyagi 1-Chome**
**Adachi-Ku Tokyo(JP)**
Inventor: **Kato, Kenshiro**
**29-1, Onta-Cho 2-Chome**
**Higashi-murayama City Tokyo(JP)**

(74) Representative: **Whalley, Kevin et al**
**MARKS & CLERK 57/60 Lincoln's Inn Fields**
**London WC2A 3LS(GB)**

EP 0 238 102 B1

EP 0 238 102 B1

## Description

This invention relates to a pneumatic radial tire having low rolling resistance, and particularly aims to improve the various performances of a pneumatic radial tire, inter alia to effectively reduce the rolling resistance by modifying the radial surface profile of a carcass.

It is known that in order to reduce the rolling resistance of a tire it is necessary to reduce the energy which is consumed due to periodic stresses and strains caused in the tire by its rolling. The rates of consumed energies at respective portions of tires are approximately 34% at the tread, 27% at the buttress portions, 25% at the sidewalls and 14% at the bead portions, according to an analysis of percentages of consumed energies of radial carcass tires under normal use conditions, that is inflated at an internal pressure of the order of at the most 2 kg/cm$^2$.

The tread makes the largest contribution to the rolling resistance of the tire, and in order to reduce inner friction and hence the rolling resistance, the compounding ratio of the tread rubber has been generally selected so as to increase its resilience. However, the wet performance, which is one of the important characteristics of the tire, is adversely affected depending upon the degree of the reduced rolling resistance.

Accordingly, the rolling resistance cannot be greatly decreased unless particular measures are taken to prevent the wet performance from being adversely affected. However, no effective method of maintaining the wet performance has yet been found.

It has been further proposed to use in the tire sidewalls a rubber compounding ratio having reduced inner friction in the same manner as in the tread. This however only reduces the rolling resistance by 3% or less, but adversely affects the damping capacity for vibration caused in the tire and hence the riding comfort of the tire.

Moreover, it has been proposed to use single layer carcasses instead of double layer carcasses, or to make the belt widths narrower, to make light weight tires in order to reduce the rolling resistance of the tires. However, such measures unavoidably reduce the rigidity of important portions of the tires and decrease the steering stability. A tire according to the preamble of claim 1 is known, e.g. from DE-A-2913949.

The present invention is based on the discovery that by suitably modifying the carcass radial surface profile the rolling resistance of a tire can be remarkably reduced and simultaneously the steering stability and the ride comfort can also be improved without adversely affecting the wet performance and durability of the tire, as a result of investigations of deformations of sidewalls of rolling tires subjected to loads.

The invention provides a pneumatic radial tire including a pair of sidewalls, bead portions at the respective radially inner ends of the sidewalls, a crown portion extending between the radially outer ends of the sidewalls, a carcass comprising at least one ply including cord layers and having ends turned-back about bead wires embedded in the bead portions to form turned-back portions, at least two belt layers consisting of rubber coated high modulus cords arranged at comparatively small angles with respect to the central circumferential line of the tire and intersecting each other, and hard rubber fillers disposed between the carcass ply and the turned-back portions thereof, the carcass having, on each side of a plane including the equatorial line of the tire in a radial cross-section passing through the rotational axis of the tire, a radial surface profile so selected that the ratio of radii R/R' is smaller than 1,0 when the tire is mounted on a normal rim and inflated to normal internal pressure, where R' is the radius of a standard circle passing through points B,E and C, where the point B is the intersection of the carcass and the line extending, parallel with the rotational axis and passing through the point A at which the flange of the rim departs from the tire, the point C is the intersection of the carcass and the line extending through the point B and perpendicular to the rotational axis of the tire, and the point E is the intersection of the line extending through the middle point D of the line segment BC and parallel with the rotational axis and the line extending through the carcass maximum width point F and perpendicular to the rotational axis, and R is the radius of profile curvature of the tire shoulder passing through the point C, and where f is the maximum distance between an arc of the standard circle and the remaining carcass line extending from the profile curvature of the shoulder to the point B having a single carcass curvature reverse position, wherein said ratio of radii R/R' is within a range of 0,65-0,85 and f is within a range of 5-10 mm.

Thus there is provided an improved pneumatic tire the rolling resistance of which is remarkably reduced with improved steering stability and ride comfort without adversely affecting its wet performance and durability by enlarging the curvature of the carcass in the radially outer zone of the carcass maximum width position and simultaneously the carcass curvature reverse extent in the radially inner zone of the sidewalls so as to intentionally deviate from the naturally equilibrated configuration.

The invention will be further described, by way of example only, with reference to the accompanying

2

drawings, in which :

Figure 1      is a schematic illustration of the relation between a radial surface profile of a tire according to the invention and an arc of a standard circle;

Figure 2      is a schematic illustration of deformation when a tire is subjected to a load;

Figure 3a     is a schematic sectional view of a tire according to the invention;

Figure 3b     illustrates a comparison of the carcass radial surface profile of the tire shown in Figure 3a with a naturally equilibrated carcass profile;

Figure 4a     is a schematic sectional view of a further embodiment of a tire of the invention;

Figure 4b     illustrates a comparison of the carcass radial surface profile of the tire shown in Figure 4a with a naturally equilibrated carcass profile and a standard circle;

Figure 5      is a schematic illustration of the deformation of a tire having a naturally equilibrated profile when internally inflated;

Figure 6      is a schematic illustration of the deformation of a tire having a carcass radial surface profile according to the invention when internally inflated;

Figure 7      schematically illustrates various mould cavity profiles for producing tires according to the invention;

Figure 8      schematically illustrates carcass radial surface profiles of comparative tires and of tires according to the invention; and

Figure 9      schedmatically further illustrates carcass radial surface profiles of comparative tires and of tires according to the invention.

In general, it is known that the deformation of sidewalls is divided into bending deformation and shear-deformation. It has now been discovered that radially inner portions of sidewalls (in the proximity of bead portions) are subjected to bending deformation much more than shearing deformation but the radially outer portions of the sidewalls (in the proximity of the tread) are subjected to shearing deformation much more than bending deformation.

Shearing deformation at the radially outer portions of the sidewalls is more complicated than the bending deformation. The present inventors have carefully investigated these deformations and have ascertained the following.

First, during rolling under a load and shearing deformation in the radially outer zones of the sidewalls of a tire is relatively small immediately below the load but considerably larger in zones which are about to be in contact with and away from a ground surface, which takes a large part of the entire consumed energy.

Second, the shearing and bending deformations are in a reciprocal relationship in that when one increases, the other decreases.

In view of the above, it has been found that even if the bending deformation concentrated immediately below the load in the radially outer portions of the sidewalls, being comparatively small, increases somewhat, the entire consumed energy can be reduced by decreasing the shearing deformation.

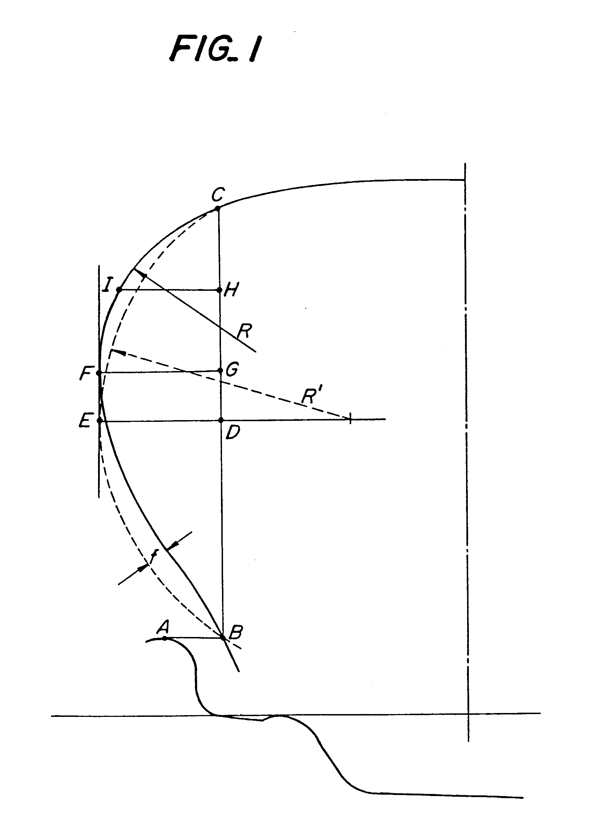

In order to increase the bending deformation in the radially outer zones of the sidewalls, it is necessary to enlarge the curvature of the profiles of the shoulders of the carcass corresponding to the radially outer zones of the sidewalls when the tire is mounted on a rim and inflated to normal internal pressure. The inventors have studied radii R of curvatures of the profiles in various manners to ascertain that a radius R whose ratio R/R' to a radius R' of a standard circle as shown in Figure 1 is within 0.65-0.85 is effective for the above purpose.

It should be noted in this case that the arc or curved line BEC shown in Figure 1 is a mere reference or standard arc and is inherently different from a carcass radial surface profile under the naturally equilibrated condition. However, since the radially outer portions of the sidewalls are relatively thin and have relatively low rigidity, the profile of the carcass radial surface under the naturally equilibrated condition is approximate to the part of the arc EC of the circle. It should therefore be noted that the above value of 0.65-0.85 of the ratio R/R' will be obtained only when the configuration under the naturally equilibrated condition is intentionally precluded.

When the ratio R/R' is more than 0.85, it is impossible to obtain the effect of reducing the rolling resistance by reducing the shearing deformation in the radially outer portions of the sidewalls by intentionally precluding the configuration under the naturally equilibrated condition.

When the ratio R/R' is less than 0.65, the bending deformation is concentrated in relatively thick buttress portions to cancel the effect of reducing the rolling resistance resulting from the reduced shearing deformation.

Then, the consumed energy due to the bending deformation at the radially inner zones of the sidewalls is generally indicated by the following equation.

Consumed energy $= A \cdot E \cdot \tan\delta \cdot (\Delta C)^2 \cdot S$      (1)

where

A :      a suitable constant

E :      modulus of elasticity of radially inner portion of sidewall

$\tan\delta$ :      loss tangent

$\Delta C$ :      variation in curvature of radially inner  portion of sidewall by bending deformation, and

S :      length of radially inner portion of sidewall from the widest portion of carcass.

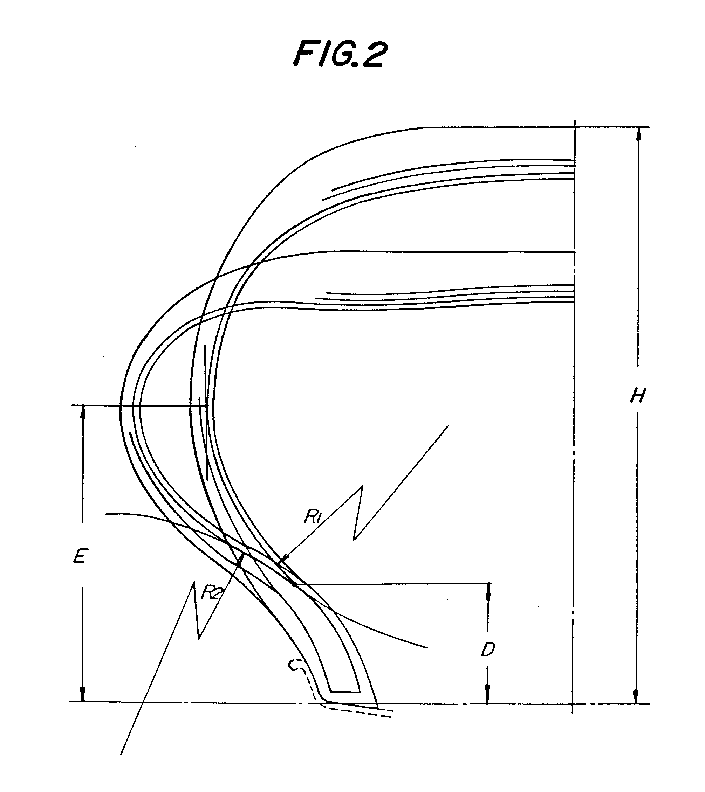

It is clear from the equation (1) that if E, $\tan\delta$ and S are respectively the same, the consumed energy is proportional to $(\Delta C)^2$. The inventors have investigated the variation in curvature of the radially inner portions of sidewalls of actual tires subjected to load to ascertain that the tire has at its radially inner portions of sidewalls an outwardly extending curvature of radius $R_1$ before deformation but the sidewalls are reversely deformed to have an inwardly extending curvature of radius $R_2$ after loading as shown in Figure 2.

The change $(\Delta C)^2$ in curvature at the radially inner portions of the sidewalls in the equation (1) is then indicated as follows.

$$(\Delta C)^2 = (\frac{1}{R_1} + \frac{1}{R_2})^2 \qquad \ldots\ldots (2)$$

If the tire mounted on a rim and inflated to normal internal pressure has already at the radially inner portions of sidewalls inwardly extending curvatures, the change $(\Delta C')^2$ in curvature is indicated as follows.

$$(\Delta C')^2 = (\frac{1}{R_1} - \frac{1}{R_2}) \qquad \ldots\ldots (3)$$

From the equations (2) and (3) it is clear that $(\Delta C')^2$ is less than $(\Delta C)^2$ and the consumed energy according to the equation (1) becomes correspondingly small.

It is thus effective to provide an inwardly extending curvature at the radially inner portions of the sidewalls when the tire is inflated to the normal internal pressure. In consideration of the fact that the bending deformation is mostly caused at the carcass mainly supporting the inflated internal pressure, the height of the reversing position of the curvatures (shown as D in Figure 2) is desirably as high as possible so as to cause the inwardly extending curvature at the carcass located at the radially inner zones of the sidewalls.

The height D must be equal to the height at a location where the radially inward zones of the sidewalls are reversely deformed from the outward to the inward direction. Although this height is dependent upon the construction in the radially inward portions of the sidewalls, the height must be in the range of 20-35% of the height H of the tire mounted on a rim and inflated to the normal internal pressure.

As above-mentioned, in order to increase the bending deformation in the radially outer zones of the sidewalls, it is necessary to enlarge the curvature of the profiles of the shoulders of the carcass when the tire is mounted on the rim inflated to normal internal pressure. For this purpose, in addition to the height D, it is necessary to properly select the height (shown by E in Figure 2) of the location where the carcass is the widest in the upper portions of the sidewalls.

The inventors have determined that the height E should be within a range of 50-65% of the height H of the tire mounted on the rim and inflated to normal internal pressure.

In this case, if the height E exceeds 65% of the height H, the bending deformation is concentrated at the relatively thick buttress portions to cancel the effect resulting from the reduced shearing deformation. If the height E is less than 50% of the height H, an unnatural carcass radial surface profile is formed in conjunction with the height D of the carcass curvature reverse position to adversely affect the tire durability and to make the manufacturing of the tire difficult.

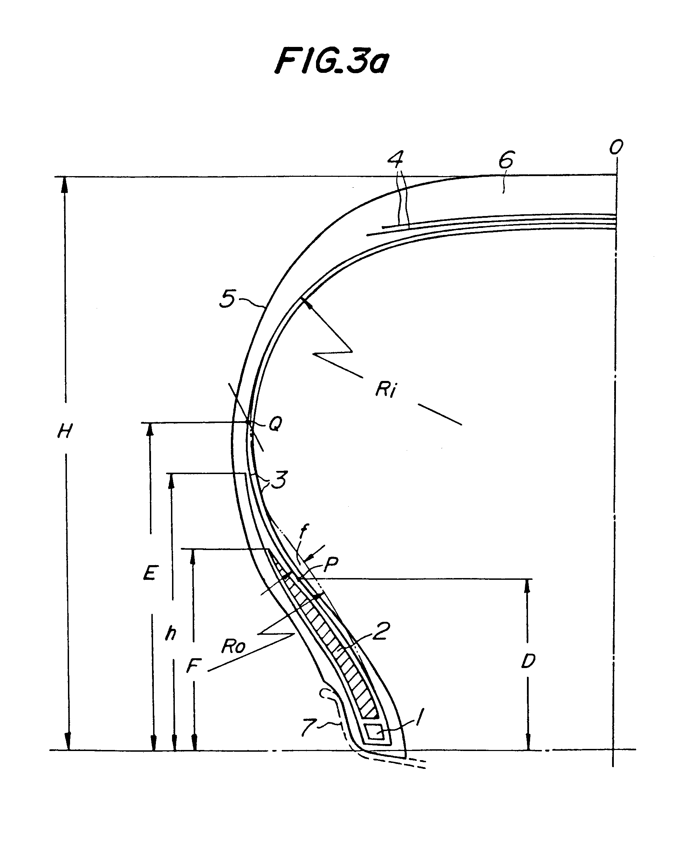

The present invention relates to a tire including at least one carcass 3 comprising at least one ply made of rubber coated organic fibre cords arranged substantially in radial planes of the tire and turned-back about bead wires 1 and embracing hard rubber fillers 2 between the carcass ply and the turned-back portions thereof, at least two belt layers 4 of rubber coated cords having a high modulus of elasticity and intersecting each other at relatively small angles for reinforcing the tire in conjunction with the carcass 3, and rubber sidewalls 5 at both sides of the carcass 3 and a rubber tread 6 outside the belt layers 4 as shown in Figure 3a. When the tire is mounted on a rim 7 and inflated to normal internal pressure, the height E at the location $\bar{Q}$ of the maximum width of the carcass 3 is within the range of 50-65% of the height H of the tire and the height D at the location P where the carcass 3 is deformed from the outward to inward direction is within the range of 20-35% of the height H. It is necessary to form the tire in a mould so that when the carcass 3 is firmly held when formed and vulcanized and the tire is mounted on a rim and inflated to an internal pressure corresponding to 5% of the normal internal pressure, the carcass 3 in the radially outer zone has a radius $R_1$ of curvature having its centre located inside the carcass 3 between the crown 6 and the location Q of the maximum carcass width, while the carcass 3 in the radially inner zone smoothly continues with the above outwardly extending carcass portion and has a radius $R_o$ of curvature having its centre located outside the carcass 3 as shown in phantom line in Figure 3a. Only the left half of the tire is illustrated in Figure 3a because it is symmetrical with respect to the equatorial line 0-0. The same is also true in respect of the other figures.

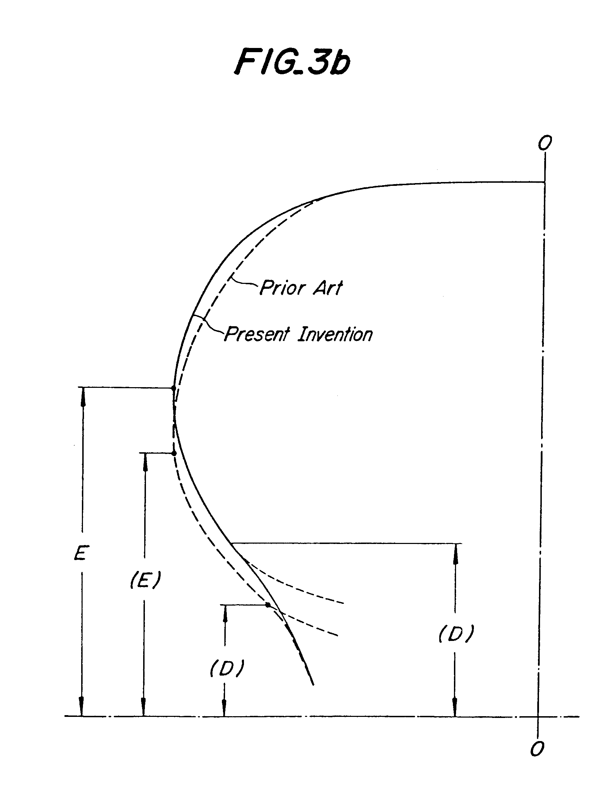

As can be seen from Figure 3b, which illustrates a comparison of the profile of the carcass according to the invention with a naturally equilibrated carcass radial surface profile (in broken lines in Figure 3b), it is noted that when the tire is mounted on a rim and inflated to normal internal pressure, the profile of the tire according to the invention is already more approximate to the deformed profile subjected to a load than that of a tire of the prior art. It is thus apparent that the tire according to the invention can consume less energy due to periodic variation in stress and strain caused by the tire rolling with the aid of appropriate variation of the carcass radial surface profile when subjected to a load.

Furthermore, the deformation f (Figure 3a) of the carcass at the radially inner zone when the tire is inflated to normal internal pressure is preferably within a range of 5-10% of the height D at the carcass reverse position.

Organic fibre cords such as polyester, nylon, rayon or aromatic polyamide fibre (Kevlar) cords may be used for the carcass 3. Metal cords, typically steel cords, organic fibre cords such as rayon, polyester and aromatic polyamide fibre cords and inextensible cords such as glass fibre cords may be used for the belt 4. These cords are arranged obliquely at angles of 10-25° with respect to the equatorial line and a plurality of layers are arranged one above the other so that the cords of the respective layers cross each other.

In superimposing the belt layers 4, the respective belt layers may have both their edges cut or auxiliary plies may be used which consist of one or more thermally contractible layers, for example, nylon cords, arranged substantially parallel with the equatorial line of the tire so as to cover the edges of the belts. Moreover, at least one of the belt layers may be provided at both its edges with turned-back portions located inside or outside the other belt or enclosing the cut edges of the other belt.

The rubber filler 2 is tapered radially outwardly from the top of the bead wire 1 to a location F slightly beyond the height D of the curvature reverse position. The rubber filler preferably has a Shore A rubber hardness of 80-97° and a loss tangent of 0.15-0.25 and a loss modulus of $8 \times 10^7$-$2.5 \times 10^8$ dyne/cm$^2$.

The end of the turned-back portion of the carcass preferably extends to a height h which is beyond the radially outer end of the hard rubber filler but radially inward of the carcass maximum width position Q.

Moreover, the inventors have investigated the degree of reversing of the curvature of the carcass and have found that it can be measured by the maximum distance f between the carcass line FB and the arc BE as shown in Figure 1 and it is suitably 5-10 mm.

As above-mentioned, the arc BEC is of a mere standard circle but is different from the carcass radial surface profile based on the natural equilibrated configuration. Since the radially inner portions of the sidewalls have a relatively high rigidity because the carcass is turned-back about the bead core and a rubber filler is disposed between the carcass and the turned-back portion thereof to reinforce the bead portion, the carcass radial surface profile based on the naturally equilibrated configuration is generally positioned inside the arc BE.

In contrast, the value f of 5-10 mm is obtained only by reversing the curvature of the carcass in the radially inner portions of the sidewalls by intentionally precluding the natural equilibrated configuration and is completely different from such equilibrated configuration. If f is less than 5 mm, the effect of reducing the consumed energy according to the principle of the equations (1)-(3) cannot be sufficiently achieved. On the other hand, if f exceeds 10 mm, the tension in the carcass in the radially inner portions of the sidewalls when inflated adversely affects the durability of the tire, and as the carcass enters inside of the tire, outer surfaces of the tire position on relatively inner sides to adversely affect the fitting of the rim.

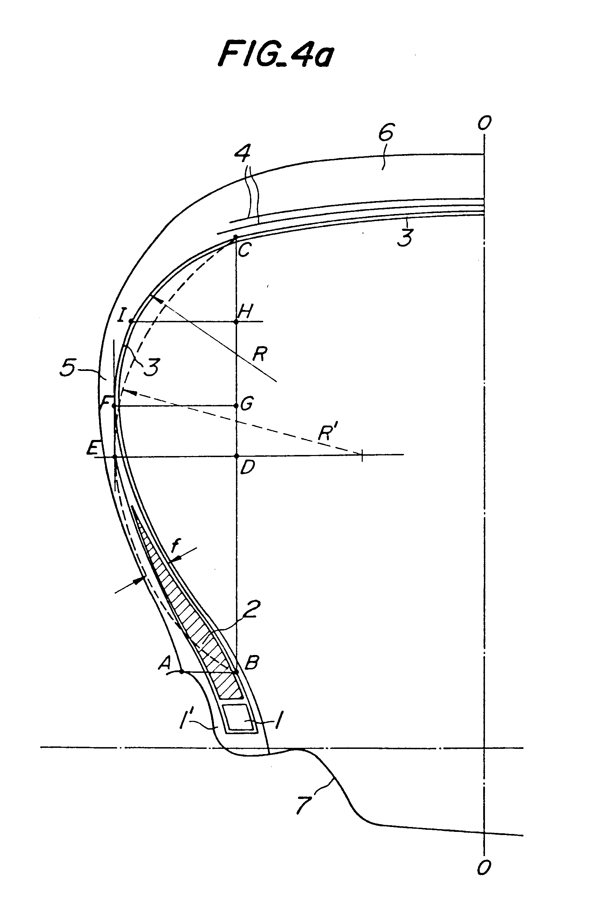

According to a further embodiment of the invention shown in Figure 4a, therefore, when the tire is mounted on a rim 7 and inflated to normal internal pressure, the radial surface profile of the carcass is so selected that R/R' is within a range of 0.65-0.85 and f is within a range of 5-10 mm to reduce the rolling resistance of the tire. In Figure 4a, A is a point where a flange of the rim 7 departs from the outer surface of the tire, B is the intersection of the carcass 3 and a line extending through the point A parallel with the rotational axis of the tire toward the inside of the tire, C is the intersection of the carcass 3 and a line extending through the point B and radially perpendicular to the rotational axis of the tire, D is the middle point of the line segment BC, E is the intersection of a line passing through the point D and parallel with the rotational axis of the tire and a line passing through the maximum carcass width point F and perpendicular to the rotational axis of the tire, G is the intersection of the line segment BC and a line passing through the point F and parallel with the rotational axis of the tire, and I is the intersection of the carcass 3 and a line passing through the middle point H of the line segment GC and parallel with the rotational axis of the tire, R is the radius of a circle passing through the points F, I and C, R' is the radius of a circle passing through the points B, E and C, and f is the maximum distance between the arc BE and the partial arc FB of the carcass 3 in the radial direction of the tire.

As can be seen from Figure 4b in the same manner as Figure 3b, the profile of the tire of the invention is more approximate to the deformed profile subjected to a load and therefore the tire according to this embodiment can also consume less energy with the aid of appropriate variation of the carcass radial surface profile when subjected to a load.

The materials of the cords for the carcass 3 and materials and arrangement and constitution of the cords for the belt 4 in the embodiment shown in Figures 4a and 4b may be the same as those in respect of the embodiment shown in Figures 3a and 3b. The tire to which this invention is applied is of course a general radial tire having no particular reinforcing rubber layer at the sidewalls, such as non-puncture tires.

In order to maintain the reverse curvatures of the carcass and provide the value f of 5-10 mm, it is necessary to provide a large bending rigidity in the proximity of the bead portions. However, reinforcement in the proximity of the bead portion with excess reinforcing members tends to adversely affect the decrease of rolling resistance aimed at. Accordingly, at least part of the bead filler rubber is preferably a hard rubber stock having a Shore A hardness of 80-97°. If the hardness is less than 80°, the effectiveness may not be accomplished sufficiently. If the hardness is greater than 97°, the durability is adversely affected although it is advantageous for maintaining the carcass radial surface profile.

As mentioned above, the tire according to the invention includes the carcass radial surface profile precluding the naturally equilibrated configuration of the carcass. This can be easily recognized by observing the variation in carcass radial surface profile when the tire is inflated.

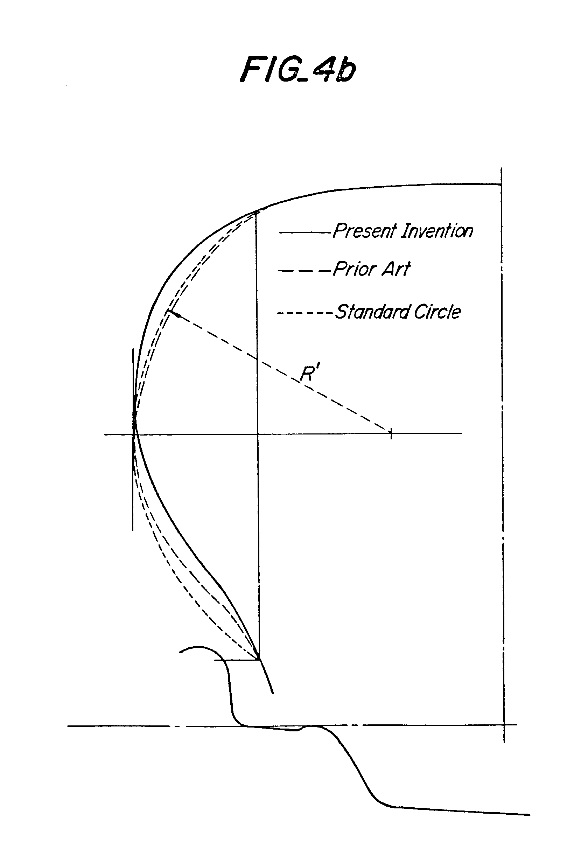

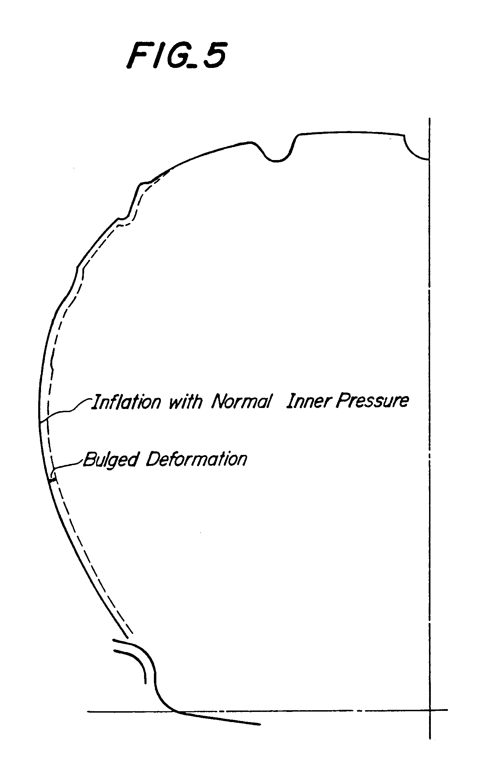

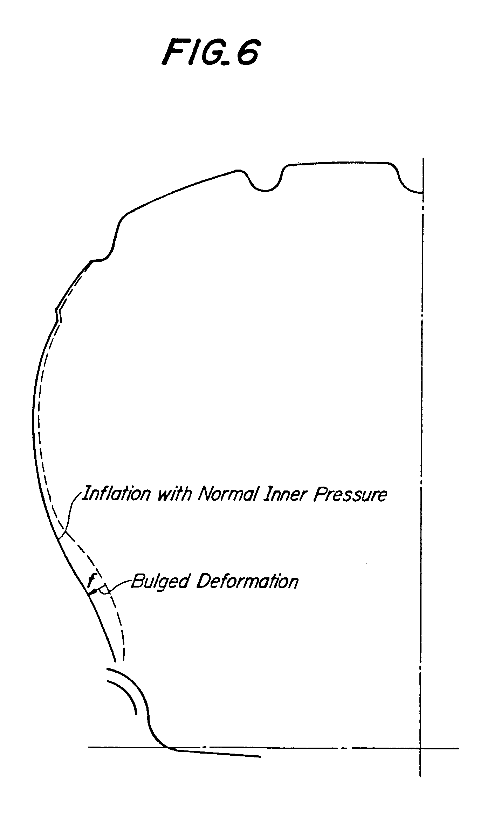

Figures 5 and 6 illustrate the variation in carcass profile of tires of 185/70 SR14 each mounted on a rim inflated from 5% of a nominal pressure to the normal inner pressure. In the case of a so-called naturally equilibrated profile, as shown in Figure 5, the entire sidewall bulges uniformly. In contrast therewith, with the carcass radial surface profile according to the invention, the bulged deformation f in the zone radially inward of the carcass maximum width position is much greater than that in the zone radially outward of the carcass maximum width position which is slightly bulged as shown in Figure 6. The solid and broken lines in Figures 5 and 6 are obtained by reproducing the inner profiles of the carcass radial surfaces by the use of plaster before and after the bulged deformation.

The difference in bulged deformation between tires of the invention and of the prior art will of course affect the distribution of tension in the carcasses. With the tire according to the invention, the carcass in the proximity of the bead portions exhibiting the large bulged deformation f is subjected to a higher tension to provide a higher apparent rigidity, while the carcass from the buttress portion to the radially outer portion of the sidewall exhibiting the small bulged deformation is subjected to a relatively low tension to provide a lower apparent rigidity. This can reduce the rolling resistance and, in addition, improve the steering stability and ride comfort.

First, a tire arranged to provide a slip angle will be considered. In this case, a lateral force acts upon the tire to cause transverse deformation. With the tire according to the invention, because of the high tension in the carcass in the proximity of the bead portions and high apparent rigidity, the tire exhibits a high rigidity against transverse deformation to provide a high cornering ability and a high stability particularly in the case of a large slip angle.

Next, a tire riding over a protrusion on a road surface will be considered. In this case, the tire deforms much more than when the tire is subjected to normal load. Accordingly, absorption of the deformation by the sidewalls is important for improving the ride confort. It will be appreciated that the tire according to the invention is constituted so as to reduce the tension in the carcass ply from the radially outer portion of the sidewall to the buttress portion, so that the apparent rigidity is lower to easily absorb the deformation, thereby improving the ride comfort.

As above described, the carcass radial surface profile is such as to render the carcass curvature reverse position as high as possible. In order to provide such a profile after the tire is inflated to normal internal pressure, it is necessary to previously impart a large bending rigidity to the proximity of bead portions. However, reinforcing the proximity of the bead portions by the use of reinforcing members more than reasonably required adversely affects the improvement or reduction of the rolling resistance. It is therefore found to be effective to utilize the following two measures.

(1) A hard rubber having a Shore A hardness of 80-97° is used for part or all of the bead filler rubber of the tire.

(2) The height of the turned-back portion of the carcass is equal to or higher than the height D of the carcass curvature reverse position.

A bead filler rubber having a hardness less than 80° does not achieve the desired effectiveness, while a bead filler rubber having a hardness of more than 97° serves to maintain the carcass radial surface profile but adversely affects the durability of the tire. Using either or both of the above features (1) and (2) effectively exhibits the various performances of the tire according to the invention.

The avoidance of reinforcement of the proximity of the bead portions using reinforcing members serves to easily provide the inwardly extending profile of the tire in the zone from the tire maximum width position to the innermost position as the curvature of the carcass reverses in the zone.

As above described, the tire according to the invention comprises at least one carcass ply made of rubber coated organic fibre cords arranged substantially in radial planes of the tire and turned-back about bead wires, at least two belt layers of rubber coated cords having a high modulus of elasticity and crossing each other at relatively small angles for reinforcing the tire in conjunction with the carcass, and sidewall rubbers on both sides of the carcass and a tread rubber outside the belt. Furthermore, it is required to fulfil the following three conditions (a)-(c).

(a) While the tire mounted on a rim is being inflated with an internal pressure from 5% of the normal internal pressure to the normal internal pressure, the deformation in the zone from the tire maximum width position to the radially inner position is relatively large but the deformation in the zone from the tire maximum width position toward the radially outer position is small.

(b) When the tire mounted on the rim is inflated to normal internal pressure, the height of the carcass maximum width position from a rim base is 50-65%, preferably 50-60%, of the height of the tire from the rim-base to the outermost surface of the tread.

(c) When the tire mounted on the rim is inflated to normal internal pressure, the height of the carcass curvature reverse position from the rim base is 20-35% of the height of the tire from the rim base to the outermost surface of the tread.

Such a tire fulfilling the above conditions, however, cannot be manufactured by a tire vulcanizing mould having a normal configuration because of the particular shape of the tire intentionally deviating from the naturally equilibrated configuration. The inventors have therefore investigated this problem to find a tire vulcanizing mould having a configuration capable of manufacturing such a tire.

In general, a cavity of a tire vulcanizing mould is determined by modifying somewhat a configuration corresponding to that of a tire mounted on a rim. According to this procedure, the heights of the mould maximum width position and of the mould curvature reverse position are determined by making the tire vulcanizing mould itself commensurate with the carcass radial surface profile of the tire to be manufactured. The inventors have studied the variation in the carcass radial surface profile when tires are inflated at from 5% to the normal internal pressure. As the result, the inventors have found that such a variation in configuration arises in the direction reducing its curvature in the zone of large curvature from sidewalls to bead portions, while the variation arises in the direction enlarging its curvature in the zone of small curvature and arises in the direction of plus R in the zone of reverse R, respectively.

For the above, it has been found that the variation in configuration arises in the direction deviating from the desired carcass radial surface profile. If the configuration of the vulcanizing mould for manufacturing a tire intentionally deviating from the naturally equilibrated configuration is determined in consideration of this fact, the resultant mould configuration is in fact extremely unbalanced, which would give rise to difficulties in manufacture and a tire manufactured in the mould includes large stresses and strains therein when the tire on a rim is inflated resulting in less durability which is unacceptable for practical use.

In contrast to the prior art, the configuration of the vulcanizing mould to be used in the method according to the invention is quite different from the carcass radial surface profile of the tire mounted on a rim. That is, the mould to be used in the method according to the invention has a cavity wherein the width of the cavity portion corresponding to the rim for mounting the tire thereon is 20-50% wider (1-25" [2.5-6.35 cm] wider in the case of a 5" [2.7 cm] rim) than the width of the rim and the cavity progressively widens from cavity portions corresponding to shoulders of the tire toward the cavity portion corresponding to the rim. The width of the cavity corresponding to the width of the rim is referred to herein as "foot width" which substantially corresponds to the distance between the bead heels of the tire. Such a vulcanizing mould results from investigations of the relation between the mould configuration and stress-strain conditions caused in tires mounted on rims and inflated. When a tire manufactured in such a mould is mounted on a rim narrower than the foot width of the mould, the height of the maximum width position of the carcass radial surface profile is higher than that of the maximum width position of the mould and the height of the carcass curvature reverse position in the proximity of the bead portions is also higher than that of the maximum width position of the mould. When the foot width of the mould is less than the width of the rim plus 20%, the above effect cannot be accomplished. A foot width of the mould more than the width of the rim plus 50% is undesirable because mounting of the tire on the rim is difficult.

When a tire manufactured in such a mould is mounted on a rim and inflated from 5% to the normal internal pressure, the carcass radial surface profile varies in the manner above described. The carcass radial surface profile after inflation to the normal internal pressure is maintained in that form intentionally deviating from the naturally equilibrated configuration. It will be appreciated that with the mould to be used in the method according to the invention the variation in carcass radial surface profile during inflation is in the direction returning to the carcass radial surface profile upon completion of vulcanizing, so that by mounting the tire on a rim narrower than the foot width the stress and strain once arisen in the tire are released without adversely affecting the durability of the tire.

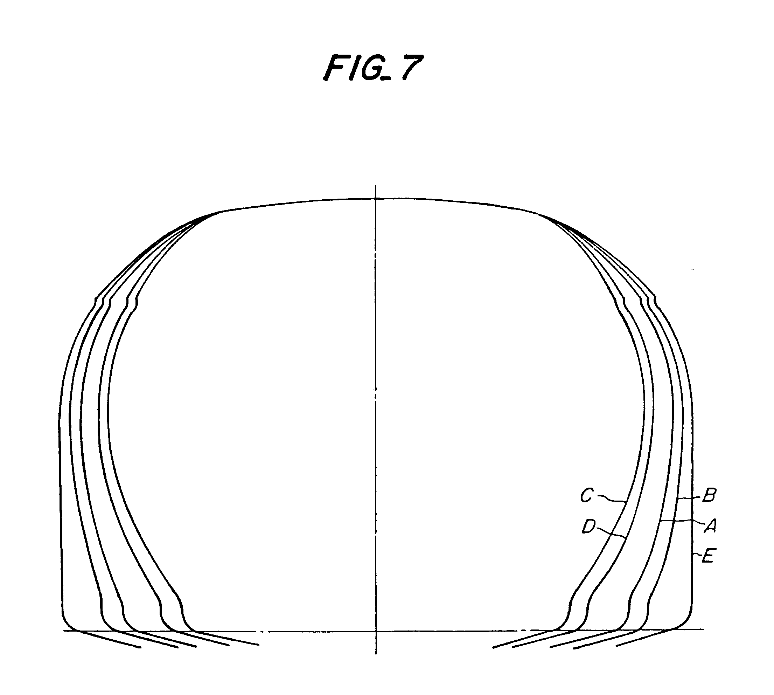

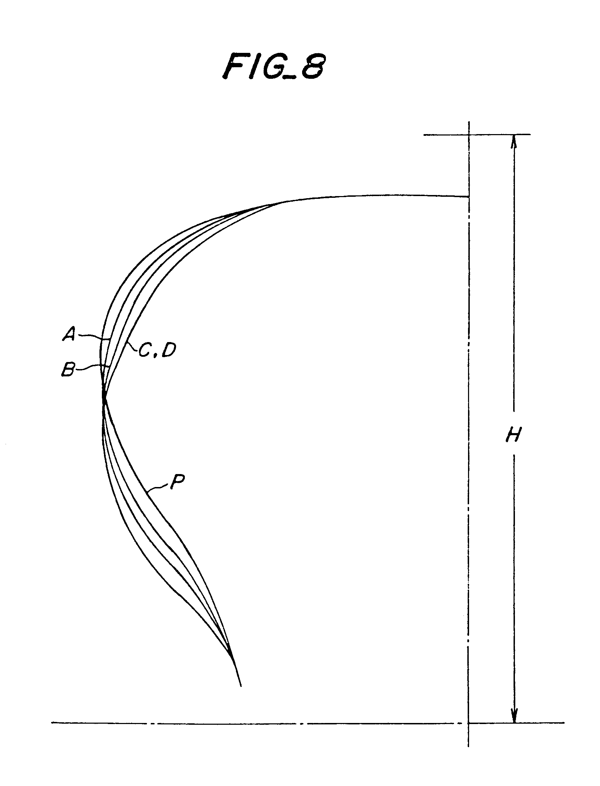

Figure 7 illustrates various profiles of cavities in moulds A, B, C, D and E for tires of 185/70 SR14 with rims having a normal width of 5"(12.7 cm). The moulds A and B have foot widths 1.5"(3.8 cm) and 2" (5.1 cm) wider than the 5"(12.7 cm) rim width, respectively. The mould C has a foot width substantially equal to the 5"(12.7 cm) rim width. The moulds D and E have foot widths 0.5"(1.3 cm) and 3"(7.6 cm) wider than the 5"(12.7 cm) rim width, respectively. Figure 8 illustrates the carcass radial surface profiles of tires manufactured in the above moulds A, B, C, D and E when the tires on the rims are inflated to normal internal pressure, the profiles A, B, C and D corresponding to the tires manufactured in the moulds A, B, C and D. It is evident that the profiles A and B deviate from the naturally equilibrated configuration and the profiles C and D substantially coincide with the naturally equilibrated configuration, which profiles C and D are not suitable for the purpose of the present invention. The tire manufactured in the mould E is not practically used because of its too wide distance between bead heels which makes it difficult to mount the tire on the rim. A curve P in Figure 8 corresponds to a curve of Comparative Example 2, as will be explained later.

The invention will be further described with reference to the following illustrative Examples.

Dimensions and properties of tires of the invention and comparative tires are shown in Table 1. Each of the carcasses 3 comprised one ply including high modulus polyester cords of 1500 d/2 arranged at 90° with respect to the equatorial line of the tire. For each tire were used two belts 4 each including steel cords (twisted structure 1x5x0.25 mm) crossing the cords of the other belt and arranged at approximately 17° with respect to the equatorial line. The height F (Figure 3a) of fillers was 35% of the height H of the tires. These tires were mounted on 5J rims. Other factors were the same in all the tires.

Table 1 Tires of the Invention and Comparative Tires

| Tire | E/H | D/H | h/H | R/R' | f mm | f/D | Bead filler | | |
| --- | --- | --- | --- | --- | --- | --- | --- | --- | --- |
| | | | | | | | Loss tangent | Hardness (Shore A) | Loss modulus (dyne./cm²) |
| Comparative tire 1 | 46% | 18% | 47% | 1.02 | 3.5 | 0 | 0.195 | 95 | $1.9 \times 10^8$ |
| Comparative tire 2 | 67% | 37% | 47% | 0.60 | 11.0 | 12 | " | 95 | " |
| Tire of Invention 1 | 57% | 24% | 47% | 0.80 | 6.0 | 7.5 | " | 95 | " |
| Tire of Invention 2 | 62% | 33% | 47% | 0.75 | 8.5 | 8 | " | 95 | " |
| Tire of Invention 3 | 57% | 22% | 15% | 0.82 | 5.5 | 6 | " | 95 | " |
| Tire of Invention 4 | 57% | 21% | 47% | 0.83 | 5.0 | 5.5 | 0.223 | 74 | $3.9 \times 10^7$ |

Note : Tire size: 185/70 SR14
Normal inner pressure: 1.7 kg/cm²
Rim: 5J-14"
Width of rim: 5" (127 mm)

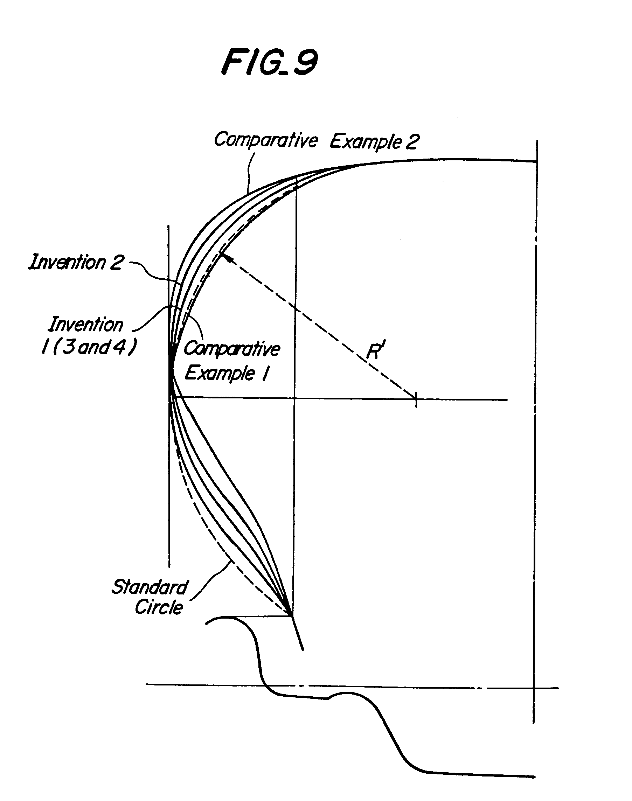

The carcass radial surface profiles of these tires are shown in Figure 9. The profiles of the tires of the invention 3 and 4 are substantially the same as that of the tire of the invention 1.

The rolling resistances of these tires are shown in Table 2, wherein the rolling resistance of the comparative tire 1 is taken to be 100 as an index. The larger the index, the better the rolling resistance.

In the test of rolling resistance, the tire was urged against a rotating drum having a 1,707 mm diameter to rotatively drive the tire to a predetermined speed whereupon the drive of the drum was stopped, so that although inertia forces of the drum and tire tend to continue their rotating movement, their rotating speeds progressively decrease because the kinetic energy is converted into heat energy due to repeated deformations at tire surfaces in contact with the drum, which heat energy dissipates into the atmosphere. The rolling resistances were calculated by degrees of deceleration during the rotation of the drum and tire owing to their inertia forces.

Table 2 Rolling Resistance of Tire

| Tire Inner pressure | Speed km/H | Comparative tire 1 | Comparative tire 2 | Tire of Invention 1 | Tire of Invention 2 | Tire of Invention 3 | Tire of Invention 4 |
|---|---|---|---|---|---|---|---|
| 1.7 kg/cm² | 50 | 100 | 102 | 109 | 111 | 106 | 106 |
| | 80 | 100 | 101 | 112 | 116 | 106 | 106 |
| | 100 | 100 | 102 | 118 | 120 | 108 | 106 |
| | 150 | 100 | 100 | 122 | 126 | 110 | 108 |
| 2.1 kg/cm² | 50 | 100 | 102 | 110 | 112 | 106 | 106 |
| | 80 | 100 | 101 | 112 | 116 | 106 | 106 |
| | 100 | 100 | 101 | 116 | 121 | 107 | 106 |
| | 150 | 100 | 101 | 120 | 129 | 109 | 107 |
| 2.5 kg/cm² | 50 | 100 | 100 | 110 | 113 | 106 | 106 |
| | 80 | 100 | 100 | 112 | 116 | 107 | 106 |
| | 100 | 100 | 101 | 116 | 120 | 108 | 106 |
| | 150 | 100 | 101 | 120 | 130 | 110 | 108 |

Note : All the loads acting upon the tires for the test are the normal load for 1.7 kg/cm² inner pressure according to JIS.

As can be seen from the Table 2, the tires 1 and 2 according to the invention achieve a remarkable improvement or reduction of the rolling resistance, being 10-30% as much as those of the comparative tires. The tire 3 according to the invention has a height of the returning carcass lower than the carcass curvature reverse position, and the effect is somewhat less than those of the tires 1 and 2 according to the invention. The tire 4 according to the invention includes bead filler rubbers having a somewhat lower

11

hardness, which exhibits substantially the same effect as that of the tire 3.

From these viewpoints, the tires 1 and 2 according to the invention are the most suitable in order to exhibit the effect of the invention to the maximum extent. However, even the tires 3 and 4 according to the invention bring about a substantial effect to improve or reduce the rolling resistance by 6 - 10% in comparison with the comparative tire 1.

In this manner, the tires according to the invention improve or reduce the rolling resistance by making higher the carcass maximum width position and the carcass curvature reverse position, or enlarging within the suitable values the curvature of carcass in the radially outer zone of the carcass maximum width position and simultaneously the carcass curvature reverse extent in the radially inner zone of the sidewalls. It is evident from the comparative tire 2 that no effect can be accomplished if these values are too high for the reason above described.

Table 3 shows cornering powers of the tire 1 according to the invention with the comparative tire 1, wherein the cornering power of the latter is assumed to be 100 as an index. The larger the index, the better is the steering performance. It can be seen from Table 3 that the steering performance of the tire according to the invention can be improved as well as the rolling resistance.

### Table 3 — Comparison of Steering Performance

| Performance \ Tire | Comparative tire 1 | Tire of Invention 1 |
|---|---|---|
| Cornering power kg/deg | 100 | 105 |

Moreover, the drum for the test was formed on its cylindrical surface with protrusions which cause forces on the rotating axle of the tires during the rotation. The forces on the axle were measured to obtain comparative data of the ride comfort against vibration as shown in Table 4. The larger the index in Table 4, the better is the ride comfort. It will be understood that the tire according to the invention has superior ride comfort and particularly improves the comfort greatly at high speeds from the data of reaction in horizontal directions.

### Table 4 — Comparison of Ride Comfort

| Measured item | Condition | Comparative tire 1 | Tire of Invention 1 |
|---|---|---|---|
| Reaction in vertical direction upon riding over protrusion | low speed | 100 | 101 |
| | high speed | 100 | 102 |
| Reaction in horizontal direction upon riding over protrusion | low speed | 100 | 101 |
| | high speed | 100 | 111 |

Note : Low speed : 20-50 km/H
High speed : 60-120 km/H

Furthermore, the inventors compared wet performances of these tires on concrete roads (skid number SN = 35 indicating the roughness of the roads) and on asphalt roads (SN = 50), and found that the tires according to the invention are not inferior in respect of their wet performance to the comparative tires.

Moreover, the inventors compared distances over which these tires travelled on a drum under high load and high internal pressure until they were damaged, and found that the tires according to the invention are not inferior in durability to the comparative tires.

As can be seen from the above, the tires according to the invention can remarkably improve or reduce the rolling resistance without adversely affecting wet performance and durability and also effectively improve steering stability and ride comfort.

## Claims

1. A pneumatic radial tire including a pair of sidewalls (5), bead portions at the respective radially inner ends of the sidewalls, a crown portion (6) extending between the radially outer ends of the sidewalls, a carcass (3) comprising at least one ply including cord layers and having ends turned back about bead wires (1) embedded in the said bead portions to form turned-back portions, at least two belt layers (4) consisting of rubber coated high modulus cords arranged at comparatively small angles with respect to the central circumferential line of the tire and intersecting each other, and hard rubber fillers (2) disposed between the said carcass ply and the turned-back portions thereof, the carcass having, on each side of a plane (0-0) including the equatorial line of the tire in a radial cross-section passing through the rotational axis of the tire, a radial surface profile so selected that the ratio of radii R/R' is smaller than 1,0 when the tire is mounted on a normal rim (7) and inflated to normal internal pressure, where R' is the radius of a standard circle passing through points B, E and C, where the point B is the intersection of the carcass and the line extending parallel with the said rotational axis and passing through the point A at which the flange of the rim departs from the tire, the point C is the intersection of the carcass and the line extending through the point B and perpendicular to the rotational axis of the tire, and the point E is the intersection of the line extending through the middle point D of the line segment BC and parallel with the rotational axis and the line extending through the carcass maximum width point F and perpendicular to the rotational axis, and R is the radius of profile curvature of the tire shoulder passing through the said point C, and where f is the maximum distance between an arc of the said standard circle and the remaining carcass line extending from the said profile curvature of the said shoulder to the point B having a single carcass curvature reverse position, characterized in that said ratio of radii R/R' is within a range of 0.65-0.85 and f is within a range of 5-10mm.

2. A tire as claimed in claim 1, characterized in that the said profile curvature of the said shoulder is slightly bulged when inflated.

3. A tire as claimed in claim 1, characterized in that the said profile curvature of the said shoulder passes through points F, I and C, where the point I is the intersection of the carcass and the line extending parallel with the rotational axis through the middle point H of the line segment GC, where the point G is the intersection of the line segment BC and the line extending through the said carcass maximum width point F parallel with the rotational axis.

## Revendications

1. Un pneumatique à carcasse radiale comprenant un couple de parois latérales (5), des parties formant talons situées au niveau d'extrémités respectives, intérieures du point de vue radial, des parois latérales, une partie sommitale (6) s'étendant entre les extrémités respectives, extérieures du point de vue radial, des parois latérales, une carcasse (3) comprenant au moins une nappe incluant des couches de câblés et possédant des extrémités rabattues autour de tringles (1) insérées dans lesdites parties formant talons de manière à former des parties retournées, au moins deux couches de ceinture (4) formées de câblés recouverts de caoutchouc possédant un module d'élasticité élevé, se recoupant à des angles relativement faibles par rapport à la ligne circonférentielle centrale du pneumatique, ainsi que des éléments de remplissage en caoutchouc dur (2), agencés entre ladite nappe de carcasse et les parties retournées de celle-ci, la carcasse possédant, de chaque côté d'un plan passant par la ligne équatoriale 0-0 du pneumatique, dans une coupe transversale radiale passant par l'axe de rotation du pneumatique, un profil de surface radiale choisi de sorte que le rapport entre les rayons R/R' est inférieur à 1,0 lorsque le pneumatique est monté sur une jante normale (7) et gonflé à la pression

# EP 0 238 102 B1

intérieure normale, R' étant le rayon d'un cercle normal passant par les points B, E et C, le point B correspondant au point d'intersection entre la carcasse et la ligne s'étendant parallèlement au dit axe de rotation et passant par un point A au niveau duquel le rebord de la jante part du pneumatique, le point C correspondant au point d'intersection entre la carcasse et la ligne passant par le point B et s'étendant perpendiculairement à l'axe de rotation du pneumatique, le point E correspondant au point d'intersection entre la ligne passant par le point central D du segment BC et s'étendant parallèlement à l'axe de rotation et la ligne passant par le point F, au niveau duquel la largeur de la carcasse est maximale, et s'étendant perpendiculairement à l'axe de rotation, R étant le rayon de courbure du profil de l'épaulement du pneumatique passant par les dits points C et F, f correspondant à la distance maximale entre un arc du dit cercle normal et la ligne de carcasse restante s'étendant de ladite courbure du profil du dit épaulement vers le point B, ayant une seule position d' inversion de la courbure de carcasse, caractérisé en ce que ledit rapport entre les rayons R/R' est compris dans un intervalle allant de 0,65 à 0,85 et en ce que la valeur f est comprise dans un intervalle allant de 5 à 10 mm.

2.  Un pneumatique selon la revendication 1, caractérisé en ce que ladite courbure du profil du dit épaulement est légèrement renflée lorsque le pneumatique est gonflé.

3.  Un pneumatique selon la revendication 1, caractérisé en ce que ladite courbure du profil du dit épaulement passe par les points F, I et C, le point I correspondant au point d'intersection entre la carcasse et la ligne s'étendant parallèlement à l'axe de rotation à travers le point central H du segment GC, le point G correspondant au point d'intersection entre le segment BC et la ligne passant par le point F, au niveau duquel la largeur de la carcasse est maximale, et s'étendant parallèlement à l'axe de rotation.

## Patentansprüche

1.  Ein Gürtelluftreifen mit einem Paar von Seitenwänden (5), Wulstabschnitten an den jeweiligen radial inneren Enden der Seitenwände, einem sich zwischen den radial äußeren Enden der Seitenwände erstreckenden Laufflächenabschnitt (6), einer Karkasse (3) mit wenigstens einer Einlage, die Kordschichten einschließt und deren Enden um in die Wulstabschnitte eingebettete Wulstdrähte (1) umgeschlagen ist, so daß sich umgeschlagene Abschnitte ergeben, wenigstens zwei Gürtellagen (4), die aus gummibeschichteten Hochleistungskorden bestehen, welche ihrerseits mit Bezug auf die mittlere Umfangslinie des Reifens unter vergleichsweise kleinen Winkeln angeordnet sind und einander schneiden, und harten Gummifüllstoffen (2), die zwischen der Karkasseneinlage und deren umgeschlagenen Abschnitten angeordnet sind, wobei die Karkasse auf jeder Seite einer Ebene (0-0), welche in einem radialen, durch die Drehachse des Reifens verlaufenden Querschnitt die Äquatorlinie des Reifens einschließt, ein radiales Oberflächenprofil hat, das so ausgewählt ist, daß das Verhältnis von Radien R/R' kleiner als 1,0 ist, wenn der Reifen auf einer normalen Felge (7) montiert und auf normalen Innendruck aufgepumpt ist, wobei R' der Radius eines durch Punkte B, E und C verlaufenden Normalkreises ist, wobei der Punkt B der Schnittpunkt der Karkasse und der Linie ist, die sich parallel zur Drehachse erstreckt und durch den Punkt A geht, an dem der Flansch der Felge vom Reifen weggeht, der Punkt C der Schnittpunkt der Karkasse und der Linie ist, die sich durch den Punkt B und senkrecht zur Drehachse des Reifens erstreckt, und der Punkt E der Schnittpunkt der Linie, die sich durch den Mittelpunkt D des Linienabschnitts BC und parallel zur Drehachse erstreckt, und der Linie ist, die sich durch den Punkt F der größten Karkassenweite und senkrecht zur Drehachse erstreckt, und wobei R der Profilwölbungsradius der Reifenschulter ist, die durch den Punkt C verläuft, und wobei f der größte Abstand zwischen einem Bogen des Normalkreises und der verbleibenden Karkassenlinie ist, die sich von der Profilwölbung der Schulter zum Punkt B mit einer einzigen entgegengesetzten Position der Karkassenwölbung erstreckt,
    **dadurch gekennzeichnet, daß**
    das Radienverhältnis R/R' innerhalb eines Bereiches von 0,65 - 0,85 und f innerhalb eines Bereiches von 5 - 10 mm liegt.

2.  Ein Reifen nach Anspruch 1, dadurch gekennzeichnet, daß die Profilwölbung der Schulter nach dem Aufpumpen leicht ausgebuchtet ist.

3.  Ein Reifen nach Anspruch 1, dadurch gekennzeichnet, daß die Profilwölbung der Schulter durch Punkte

14

F, I und C verläuft, wobei der Punkt I der Schnittpunkt der Karkasse und der Linie ist, die sich parallel zur Drehachse durch den Mittelpunkt H des Linienabschnitts GC erstreckt, wobei der Punkt G der Schnittpunkt des Linienabschnitts BC und der Linie ist, die sich durch den Punkt F der größten Karkassenweite parallel zur Drehachse erstreckt.

FIG. 1

# FIG.2

# FIG.3a

## FIG.3b

Prior Art

Present Invention

O

E

(E)

(D)

(D)

O

# FIG_4a

# FIG_4b

Present Invention

— — —Prior Art

- - - - -Standard Circle

$R'$

# FIG.5

Inflation with Normal Inner Pressure

Bulged Deformation

# FIG.6

Inflation with Normal Inner Pressure

f  Bulged Deformation

# FIG_7

# FIG_8

# FIG.9

Comparative Example 2

Invention 2

Invention 1 (3 and 4)

Comparative Example 1

R'

Standard Circle